# EUROPEAN PATENT APPLICATION

(11) **EP 1 936 473 A1**
(43) Date of publication of application: **25.06.2008**
(21) Application number: 06782972.1
(22) Date of filing: 24.08.2006
(51) Int. Cl.: G06F 3/00, G06F 3/08, G06K 17/00

(54) **MEMORY CARD INPUT/OUTPUT APPARATUS AND CONTROL METHOD THEREOF**

(30) Priority: 12.09.2005 JP 2005263211
(71) Applicant: Sharp Kabushiki Kaisha, Osaka-shi, Osaka 545-8522 (JP)
(72) Inventor: KURODA, Hisashi, Hiroshima 739-0041 (JP); TANABE, Hiroki, Hiroshima 739-0005 (JP)
(74) Representative: Müller - Hoffmann & Partner
(86) International application number: PCT/JP2006/316568
(87) International publication number: WO 2007/032189

(57) **Abstract**

An input/output device for a memory card is provided, which is capable of simplifying a configuration of direction signals generated when a host controller respectively controls transmission directions of data signals.

The input/output device for a memory card is configured to include: a driver circuit 24 for outputting to a memory card 3 a data signal having been input from a host controller 1; a driver circuit 25 for outputting to the host controller 1 a data signal having been input from the memory card 3; a transmission direction control part 27 for switching a transmission direction of each of the data signals, which are respectively transmitted via two or more input/output terminals used in common to an input of the data signal to the driver circuit 24 and an output of the data signal from the driver circuit 25; and a mode register 29 for rewritably storing transmission direction information, wherein the transmission direction control part 27 switches the transmission direction of the data signal based on a direction signal from the host controller 1 and the transmission direction information.

## Description

### TECHNICAL FIELD

The present invention relates to a level shifter for a memory card and a control method therefor, and more particularly to an improvement of an input/output device for a memory card, such as a level shifter, for inputting/outputting a signal transmitted between an input/output device having a memory card type interface and a host controller.

### BACKGROUND ART

In recent years, a host controller for controlling an LCD controller or performing read/write to a memory card has been reduced in operating voltage due to demands for an increase in processing speed and a reduction in power consumption. On the other hand, a memory card such as an SD (Secure Digital: registered trademark) card, and an input/output card for a peripheral device thereof are often standardized so as to operate at a signal voltage higher than the operating voltage of the host controller from the perspective of ensuring compatibility with various types of equipment. For this reason, a level shifter for converting the signal voltage has conventionally been used. Typically, the memory card and input/output card operate based on a clock signal supplied from the host controller, whereas the level shifter operates so as to voltage-convert the clock signal input from the host controller and then output the converted signal to the memory card or input/output card.

When the host controller writes data into the memory card, a control signal and data signal from the host controller along with the clock signal are voltage-converted (stepped up) by the level shifter, and then output to the memory card. Also, when the host controller reads data stored in the memory card, a control signal and data signal from the memory card are voltage converted (stepped down) by the level shifter, and then output to the host controller. As described, in the level shifter between the memory card and the host controller, the data signal should be bi-directionally transmitted, so that control for switching a transmission direction of the data signal is performed.

In particular, a driver circuit for driving a signal line along which the data signal is transmitted is provided for each of the transmission directions, and switching between the driver circuits is performed based on a direction signal, which specifies a data-by-data transmission direction, from the host controller.

In addition, Patent document 1 describes an LSI capable of, without requiring an external instruction, taking in an operation mode setting signal for setting an operation mode. Regarding the LSI described in Patent document 1, there is disclosed a technique for switching an input/output direction of a bidirectional buffer based on a control signal from a memory control part.
Patent document 1: Japanese Unexamined Patent Publication No. 1999-273380

### DISCLOSURE OF THE INVENTION

### PROBLEM TO BE SOLVED BY THE INVENTION

In general, in the memory card such as the SD card, its specification specifies a plurality of operation modes among which control of an input/output direction of a data signal for each input/output terminal is different. For example, the SD card has two modes in which data is input/output on a 1-bit basis and on a 4-bit basis, respectively, and an SDIO card (input/output card for a peripheral device) further has a Read Wait function compliant mode and noncompliant mode. The Read Wait function is a function of making the input/output card suspend an output of data temporarily when the host controller reads the data from the input/output card, in which a control signal for instructing the suspension of the output is transmitted from the host controller to the input/output card. The control signal is transmitted along one of signal lines for transmitting data signals, regardless of transmission directions of data signals along the signal lines. For this reason, the conventional input/output device for a memory card, such as the level shifter, as described above should accommodate itself to any of the plurality of operation modes of the memory card or input/output card, so that there arises a problem that a direction signal should be provided for each of the data signals. That is, there exists a problem that the host controller should generate the direction signal, which varies depending on read/write of data to the memory card, for each of the bit-by-bit data signal. Also, there exists a problem that in a case where the direction signal for each of the data signals is input to the input/output device for a memory card, the number of terminals of the input/output device for a memory card increases.

The present invention is made in consideration of the above circumstances, and it is therefore an object thereof to provide an input/output device for a memory card capable of simplifying a configuration of the direction signals generated when the host controller respectively controls transmission directions of the bit-by-bit data signal, and a control method therefor.

### MEANS FOR SOLVING PROBLEM

The input/output device for a memory card according to the present invention is intended for inputting/outputting a signal transmitted between an input/output device having a memory card type interface and a host controller, and configured to comprise: a first driver circuit for outputting to the input/output device a data signal having been input from the host controller; a second driver circuit for outputting to the host controller a data signal having been input from the input/output device; transmission direction control means adapted to switch a transmission direction of each of the data signals, the data signals being respectively transmitted via two or more input/output terminals used in common to the input of the data signal to the first driver circuit and the output of the data signal from the second driver circuit; and transmission direction information storage means adapted to rewritably store transmission direction information, wherein the transmission direction control means switches the transmission direction of the data signal based on a direction signal from the host controller and the transmission direction information. The term "memory card type interface" herein refers to an interface that operates based on the same structure or protocol as that of the memory card. As the input/output device having such an interface, an input/output card for a peripheral device, such as an SDIO card (Secure Digital Input/Output Card), or a large capacity memory device such as an HDD (Hard Disk Drive) can be used.

In the input/output device for a memory card, the data signal having been input from the host controller is output to the input/output device by the first driver circuit, and the data signal having been input from the input/output device is output to the host controller by the second driver circuit. At this time, the transmission direction of each of the data signals respectively transmitted via the plurality of input/output terminals used for the input and output of the data signals to and from the respectively corresponding driver circuits is switched based on the direction signal from the host controller and the rewritably stored transmission direction information. In such a configuration, by preliminarily storing the transmission direction information corresponding to an operation mode of the memory card or input/output card, a transmission direction of a data signal among the bit-by-bit data signals, which is not required to be switched in accordance with data in a specific operation mode, can be specified by the transmission direction information, so that the transmission direction of each of the data signal can be switched without respectively requiring direction signals for the data signals. Accordingly, the configuration of the direction signals generated when the host controller respectively controls the transmission directions of the bit-by-bit data signal can be simplified. Also, even if the host controller respectively provides the direction signal for each of the data signal, the number of direction signals input to the input/output device for a memory card can be reduced.

An input/output device for a memory card according to the present invention is, in addition to the above configuration, configured such that the first driver circuit is comprised of a voltage conversion circuit for stepping up a signal voltage, and the second driver circuit is comprised of a voltage conversion circuit for stepping down a signal voltage.

Also, an input/output device for a memory card according to the present invention is, in addition to the above configuration, configured to include transmission direction information rewriting means adapted to rewrite the transmission direction information based on transmission direction information update data input from the host controller. In this input/output device for a memory card, the transmission direction information update data is input from the host controller via, for example, a serial interface. Alternatively, it may be input via a parallel bus instead of the serial interface.

A control method for an input/output device for a memory card according to the present invention is comprised of a first driver circuit for outputting to a memory card a data signal having been input from a host controller and a second driver circuit for outputting to the host controller a data signal having been input from the memory card, and configured to comprise: a transmission direction information writing step of writing transmission direction information in a register based on transmission direction information update data having been input from the host controller; and a transmission direction switching step of switching a transmission direction of each of the data signals based on a direction signal from the host controller and the transmission direction information, the data signals being respectively transmitted via two or more input/output terminals used in common to the input of the data signal to the first driver circuit and the output of the data signal from the second driver circuit.

### EFFECT OF THE INVENTION

The input/output device for a memory card and control method therefor according to the present invention can switch transmission directions without respectively requiring direction signal for each of the data signals, and therefore can simplify a configuration of the direction signals generated when the host controller respectively controls the transmission directions of the bit-by-bit data signal. Also, even if the host controller respectively provides the direction signal for each of the data signals, the number of direction signals input to the input/output device for a memory card can be reduced.

### BEST MODE FOR CARRYING OUT THE INVENTION

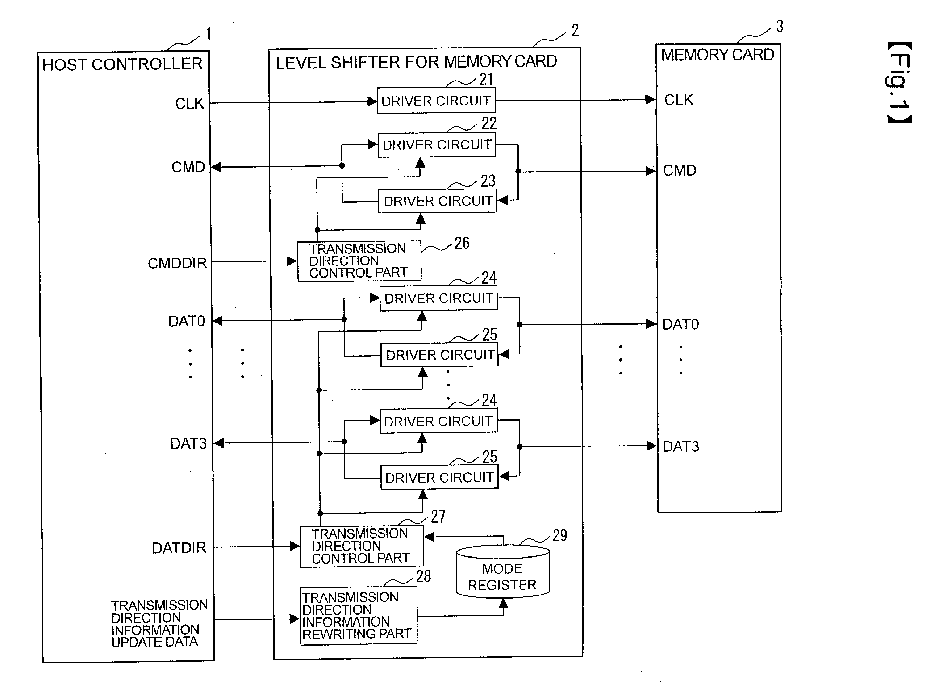

Fig. 1 is a block diagram illustrating one example of a schematic configuration of a data transmission system including an input/output device for a memory card according to an embodiment of the present invention. The diagram illustrates the entire system substantially comprised of: a level shifter 2 as one example of the input/output device for a memory card; and a host controller 1 and memory card 3 both of which communicate with each other via the level shifter 2. The level shifter 2 according to the present embodiment is provided within an application chip such as an LCD (Liquid Crystal Display) controller, and inputs/outputs a signal transmitted between the memory card 3 and the host controller 1.

The host controller 1 is a control device for reading/writing data to memory card 3, and generates a clock signal CLK, command signal CMD, data signals DAT0 to DAT3, command direction signal CMDDIR, data direction signal DATDIR, and transmission direction information update data.

The clock signal CLK generated by the host controller 1 is a synchronization signal that is supplied from the host controller 1 in order for the memory card 3 to send/ receive the command signal CMD, and data signals DAT0 to DAT3 to/from the host controller 1. Also, as the command signal CMD that the host controller 1 sends/receives to/from the memory card 3, a control signal for instructing operation mode switching, data writing, data reading, or the like is sent from the host controller 1 to the memory card 3, and a response signal as a response to the instruction from the host controller 1, and memory card information are sent from the memory card 3 to the host controller 1. The command direction signal CMDDIR is a control signal for instructing a transmission direction of the command signal CMD.

Each of the data signals DAT0 to DAT3 is a signal for transmitting data having been written/read to the memory card 3, and provided on a bit-by-bit basis. The data direction signal DATDIR is a control signal for instructing a transmission direction of each of the data signals, and specifies the transmission direction on a data-by-data basis. The transmission direction information update data is generated as a signal for setting data in a register within the application chip provided with the level shifter 2, for example, in a register for storing control information on LCD display. The transmission direction information update data is generated as, for example, serial data, and input from the host controller 1 to the level shifter 2 via a serial interface. In addition, the transmission direction information update data may be transferred to the level shifter 2 via a parallel bus instead of the serial interface.

The memory card 3 is a compact removable non-volatile memory device, and operates based on the clock signal CLK and command signal CMD supplied from the host controller 1. For example, a card incorporating a semiconductor memory, such as the SD (Secure Digital: registered trademark) card, is used as the memory card 3, and attached to the level shifter 2 as necessary. Note that a case where data is read/written to the memory card 3 is herein described as an example; however, the memory card is not particularly required if an input/output device having a memory card type interface is available. The term "memory card type interface" herein refers to an interface that operates based on the same structure or protocol as that of the memory card. As the input/output device having such an interface, an input/output card for a peripheral device, such as an SDIO card, or a large capacity memory device such as an HDD (Hard Disk Drive) can be used, besides the memory card. We herein assume that a case where the data is read/written to such an input/output device can also be described in a similar manner.

The level shifter 2 is a voltage converter for converting a signal voltage of a signal transmitted between the host controller 1 and the memory card 3, and substantially comprised of a plurality of driver circuits 21 to 25, transmission direction control parts 26 and 27, a transmission direction information rewriting part 28, and a mode register 29. The host controller 1 operates at an operating voltage of, for example, 1.8 V. On the other hand, the memory card 3 is standardized so as to operate at a signal voltage of, for example, 3.0 V. Accordingly, by providing the level shifter 2 for converting the signal voltage between the host controller 1 and the memory card 3, communication between the host controller 1 and the memory card 3 becomes possible.

The driver circuit 21 is substantially comprised of a voltage conversion circuit for stepping up the signal voltage, and performs an operation for stepping up the clock signal CLK input from the host controller 1, and then outputting it to the memory card 3. The driver circuit 22 steps up the command signal CMD input from the host controller 1, and then outputs it to the memory card 3. The driver circuit 23 performs an operation for stepping down the command signal input from the memory card 3, and then outputting it to the host controller 1. The driver card 24 steps up the data signal input from the host controller 1, and then outputs it to the memory card 3. The driver circuit 25 performs an operation for stepping down the data signal input from the memory card 3, and then outputting it to the host controller 1. The driver circuits 24 and 25 are provided for each of the data signals DAT0 to DAT3, and drive the bit-by-bit data signal.

The mode register 29 is storage means adapted to rewritably store transmission direction information. The transmission direction information is substantially comprised of mode specification information for specifying an operation mode of the memory card 3 or input/output card, and rewritten as necessary herein by the transmission direction information rewriting part 28. The transmission direction information rewriting part 28 performs an operation for rewriting the transmission direction information in the mode register 29 based on the transmission direction information update data input from the host controller 1.

The transmission direction control part 27 performs control for switching a transmission direction of each of the data signals DAT0 to DAT3 based on the transmission direction information in the mode register 29 and the data direction signal DATDIR input from the host controller 1. We herein assume that there are two modes as an operation mode of the memory card 3 or input/output card, i.e., a mode in which data is input/output on a 1-bit basis, and a mode in which data is input/output on a 4-bit basis. In a case where data is input/output on a 1-bit basis, only the transmission direction of the data signal DAT0 is switched on a data-by-data basis, whereas those of the other data signals DAT1 to DAT3 are specified. On the other hand, in a case where data is input/output on a 4-bit basis, the transmission directions of the data signals DAT0 to DAT3 may be respectively switched on a data-by-data basis at the same time. In this case, the switching is performed such that all the transmission directions of the data signals are the same. Also, the transmission direction control part 26 performs control for switching a transmission direction of the command signal CMD based on a command direction signal CMDDIR input from the host controller 1.

We herein assume that when the memory card 3 or input/output card is attached, or the host controller 1 is started up, the transmission direction information update data for rewriting the transmission direction information is generated based on card information read from the card, and updated based on a predetermined control procedure.

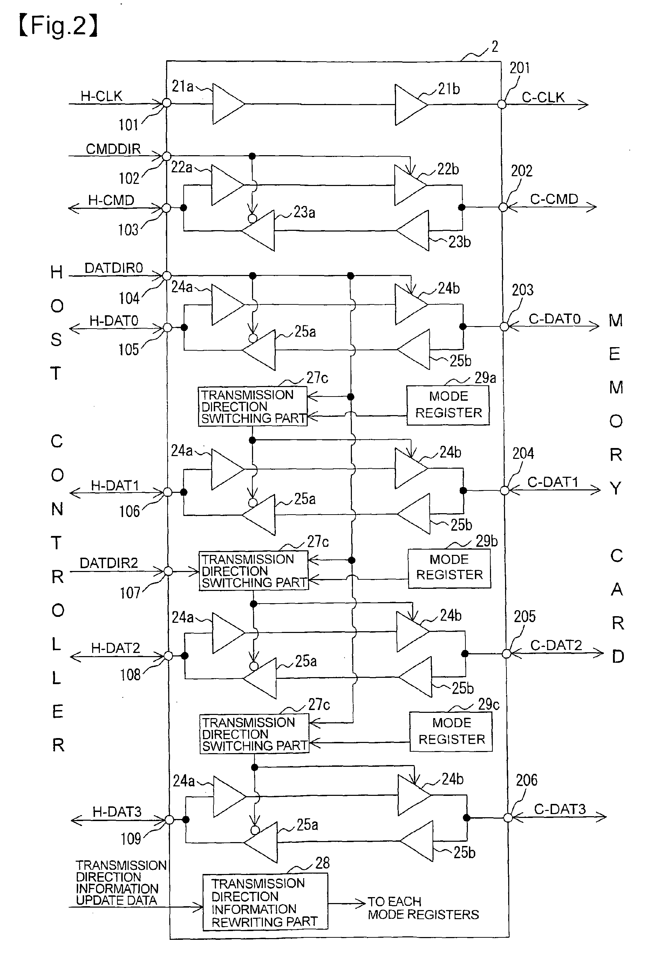

Fig. 2 is a circuit diagram illustrating a configuration example in a main part of the data transmission system illustrated in Fig. 1, in which the level shifter 2 is illustrated. The level shifter 2 is substantially comprised of: an input buffer and an output buffer, each of which is provided for each transmission direction of each of the signals; the transmission direction information rewriting part 28; three pairs of a transmission direction switching part (27a to 27c) and a mode register (29a to 29c), each of which is provided for each of transmission lines for the data signals DAT1 to DAT3; and input/output terminals 101 to 109 and 201 to 206. Each buffer is the driver circuit for driving an output signal line based on an input signal.

A clock signal H-CLK input from the host controller to the input terminal 101 for the clock signal is transmitted to the output terminal 201 via the input and output buffers 21a and 21b, and then output to the memory card. A command signal H-CMD input from the host controller to the input/output terminal 103 for the command signal is transmitted to the input/output terminal 202 via the input and output buffers 22a and 22b, and then output to the memory card. On the other hand, a command signal C-CMD input from the memory card to the input/output terminal 202 is transmitted to the input/output terminal 103 via the input and output buffers 23b and 23a, and then output to the host controller. A transmission direction of the command signal is switched based on the command direction signal CMDDIR input from the host controller via the input terminal 102. The command direction signal CMDDIR is a control signal for instructing the transmission direction of the command signal. We herein assume that a level of the signal is switched between High and Low depending on the transmission direction of the command signal, the command direction signal is input to the output buffer 22b, and an inverted signal of the command direction signal is input to the output buffer 23b. By switching on or off each of the output buffers 22b and 23b in accordance with the direction signal level, High or Low, the transmission direction of the command signal CMD is switched.

A data signal input from the host controller to the input/output terminal 105 for the data signal H-DAT0 is transmitted to the input/output terminal 203 via the input and output buffers 24a and 24b, and then output to the memory card. On the other hand, a data signal C-DAT0 input from the memory card to the input/output terminal 203 is transmitted to the input/output terminal 105 via the input and output buffers 25b and 25a, and then output to the host controller. A transmission direction of the data signal DAT0 is switched based on a data direction signal DATDIR0 input from the host controller via the input terminal 104. We herein assume that a level of the signal is switched between High and Low depending on the transmission direction of the data signal, the data direction signal is input to the output buffer 24b, and an inverted signal of the data direction signal is input to the output buffer 25a. By switching on or off each of the output buffers 24b and 25a in accordance with the direction signal level, High or Low, the transmission direction of the data signal DAT0 is switched.

A data signal input from the host controller to the input/output terminal 106 for the data signal H-DAT1 is transmitted to the input/output terminal 204 via the input and output buffers 24a and 24b, and then output to the memory card. On the other hand, a data signal C-DAT1 input from the memory card to the input/output terminal 204 is transmitted to the input/output terminal 106 via the input and output buffers 25b and 25a, and then output to the host controller. A transmission direction of the data signal DAT1 is switched based on a control signal output from the transmission direction switching part 27a. We herein assume that a level of the signal is switched between High and Low depending on the transmission direction of the data signal, the above control signal is input to the output buffer 24b, and an inverted signal of the control signal is input to the output buffer 25a.

The transmission direction switching part 27a is a transmission direction control part for switching the transmission direction of the data signal DAT1 based on the data direction signal DATDIR0, and transmission direction information set in the mode register 29a.

A data signal input from the host controller to the input/output terminal 108 for the data signal H-DAT2 is transmitted to the input/output terminal 205 via the input and output buffers 24a and 24b, and then output to the memory card. On the other hand, a data signal C-DAT2 input from the memory card to the input/output terminal 205 is transmitted to the input/output terminal 108 via the input and output buffers 25b and 25a, and then output to the host controller. A transmission direction of the data signal DAT2 is switched based on a control signal output from the transmission direction switching part 27b.

The transmission direction switching part 27b is a transmission direction control part for switching the transmission direction of the data signal DAT2 based on a data direction signal DATDIR2 input from the host controller via the input terminal 107, the data direction signal DATDIR0, and transmission direction information set in the mode register 29b.

A data signal input from the host controller to the input/output terminal 109 for the data signal H-DAT3 is transmitted to the input/output terminal 206 via the input and output buffers 24a and 24b, and then output to the memory card. On the other hand, a data signal C-DAT3 input from the memory card to the input/output terminal 206 is transmitted to the input/output terminal 109 via the input and output buffers 25b and 25a, and then output to the host controller. A transmission direction of the data signal DAT3 is switched based on a control signal output from the transmission direction switching part 27c.

The transmission direction switching part 27c is a transmission direction control part for switching the transmission direction of the data signal DAT3 based on the data direction signal DATDIR0, and transmission direction information set in the mode register 29c.

The transmission direction information rewriting part 28 performs an operation for writing transmission direction information into each of the mode registers 29a to 29c, or rewriting already-set transmission direction information, based on the transmission direction information update data input from the host controller via an input terminal 110.

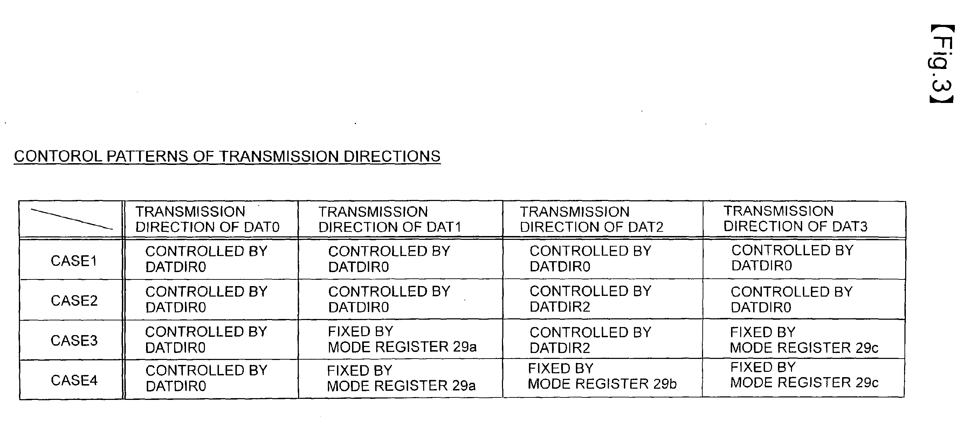

Fig. 3 is a diagram illustrating one example of operations in the level shifter illustrated in Fig. 2, in which control patterns of the transmission directions of the data signals DAT0 to DAT3 corresponding to the respective input/output terminals are illustrated as an example. The transmission direction of each of the data signals DAT0 to DAT3 is switched in accordance with the operation mode of the memory card, separately from the switching on a data-by-data basis. The transmission direction of the data signal DAT0 is switched only on a data-by-data basis based on the data direction signal DATDIR0.

"Case 1" represents a case where the transmission directions of the data signals DAT0 to DAT3 are controlled by the data direction signal DATDIR0, whereas "Case 2" represents a case where the transmission directions of the data signals DAT0, DAT1, and DAT3 are controlled by the data direction signal DATDIR0, and that of the data signal DAT2 is controlled by the data direction signal DATDIR2.

Also, "Case 3" represents a case where the transmission direction of the data signal DAT0 is controlled by the data direction signal DATDIR0, a transmission direction of a transmission line for the data signal DAT2 is controlled by the data direction signal DATDIR2, and transmission directions of the data signals DAT1 and DAT3 are fixed to a direction specified by a corresponding one of the mode registers. Further, "Case 4" represents a case where the transmission direction of the data signal DAT0 is controlled by the data direction signal DATDIR0, and that of each of the data signals DAT1 to DAT3 is fixed to a direction specified by a corresponding one of the mode registers.

By configuring in this manner, the transmission directions of the data signals DAT0 to DAT3, depending on a plurality of operation modes required by a specification of the memory card, can be respectively switched in an appropriate manner with use of the two data direction signals DATDIR0 and DATDIR2.

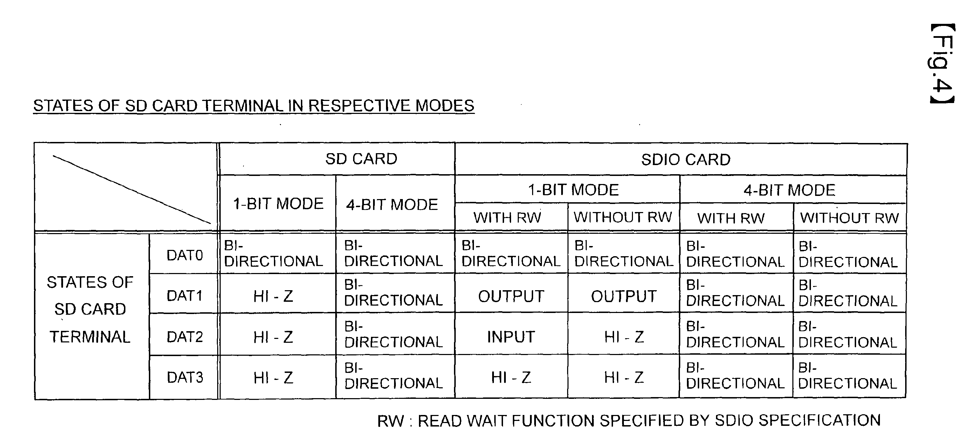

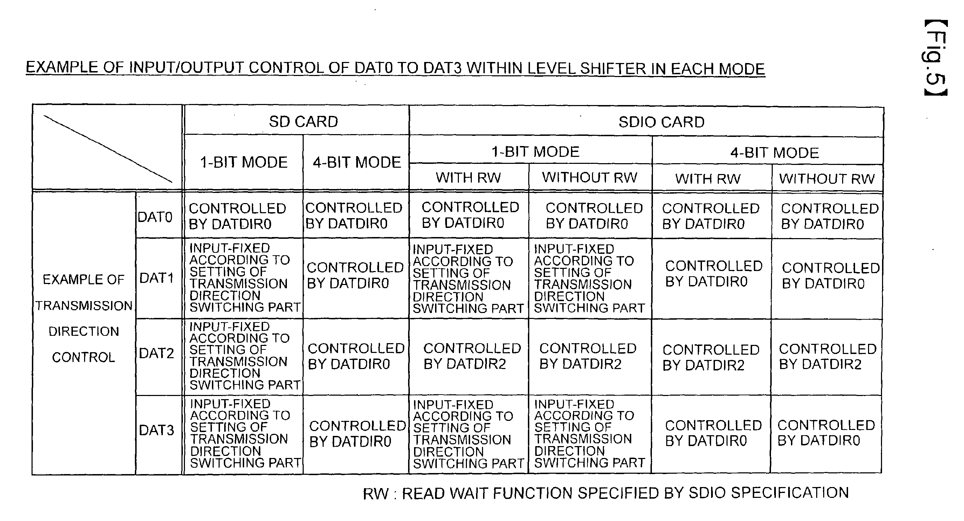

Fig. 4 illustrates states of the DAT0 to DAT3 terminals in the respective modes of the SD and SDIO cards as an example. In this example, the two operation modes of the SD card and the four operation modes of the SDIO card are illustrated. Also, Fig. 5 illustrates a control method of the transmission directions of DAT0 to DAT3 within the level shifter 2 in each of the modes of the SD and SDIO cards illustrated in Fig. 4, as an example.

The operation modes of the SD card include the "1-bit mode" and "4-bit mode", and in the "1-bit mode", a signal line for the data signal DAT0 at an interface of the memory card is used for bidirectional data communication, and those for the other data signals DAT1 to DAT3 are brought into a high impedance state. In this operation mode, the transmission direction of the data signal DAT0 is switched by the data direction signal DATDIR0, and those of the other data signals DAT1 to DAT3 are "input-fixed". The term "input-fixed" herein refers to a case where a signal is always transmitted in a fixed direction from the memory card to the host controller, whereas "output-fixed" refers to a case where a signal is always transmitted in a fixed direction from the host controller to the memory card.

On the other hand, in the "4-bit mode" of the SD card, the signal lines for the data signals DAT0 to DAT3 at the interface of the memory card are used for bidirectional data communication. In this operation mode, any of the transmission directions of the data signals is switched by the data direction signal DATDIR0.

The operation modes of the SDIO card include the "1-bit mode" and "4-bit mode", each of which further has the operation modes, i.e., "with Read Wait function" and "without Read Wait function". The Read Wait function herein is a function specified by the SDIO specification. In a "1-bit mode" "with Read Wait function", the signal line for the data signal DAT0 at an interface on a card side is used for bidirectional data communication, and that for the data signal DAT1 is used for an output of an interrupt signal. Also, the signal line for the data signal DAT2 is used for an input of a Read Wait signal, and that for the data signal DAT3 is brought into a high impedance state. In this operation mode, the transmission direction of the data signal DAT0 is switched by the data direction signal DATDIR0, and that of the data signal DAT2 is switched by the data direction signal DATDIR2. The transmission directions of the other data signals DAT1 and DAT3 are "input-fixed".

The interrupt signal is a control signal that a functional part such as "Bluetooth (registered trademark)" mounted on the SDIO card outputs to the host controller. The Read Wait signal is a control signal that is generated to make the input/output card suspend an output of data when the host controller reads the data from the input/output card. These control signals are output at a predetermined timing after data output.

In a "1-bit mode" "without Read Wait function", the signal line for the data signal DAT0 at the interface on the card side is used for bidirectional data communication, and that for the data signal DAT1 is used for an output of the interrupt signal. Also, the signal lines for the data signals DAT2 and DAT3 are brought into a high impedance state. In this operation mode, the transmission direction of the data signal DAT0 is switched by the data direction signal DATDIR0, and that of the data signal DAT2 is switched by the data direction signal DATDIR2. The transmission directions of the other data signals DAT1 and DAT3 are "input-fixed".

On the other hand, in a "4-bit mode" "with Read Wait function", the signal lines for the data signals DAT0 and DAT3 at the interface on the card side are used for bidirectional data communication, and that for the data signal DAT1 is used for both outputs of the interrupt signal and bidirectional data communication. Also, the signal line for the data signal DAT2 is used for both inputs of the Read Wait signal and bidirectional data communication. In this operation mode, the transmission directions of the data signals DAT0, DAT1, and DAT3 are switched by the data direction signal DATDIR0, and that of the data signal DAT2 is switched by the data direction signal DATDIR2.

In a "4-bit mode" "without Read Wait function", the signal lines for the data signals DAT0, DAT2, and DAT3 at the interface on the card side are used for bidirectional data communication, and that for the data signal DAT1 is used for both outputs of the interrupt signal and bidirectional data communication. In this operation mode, the transmission directions of the data signals DAT0, DAT1, and DAT3 are switched by the data direction signal DATDIR0, and that of the data signal DAT2 is switched by the data direction signal DATDIR2.

By switching the transmission direction of each of the data signals in this manner, a configuration of the data direction signals can be simplified, as compared with the conventional level shifter in which a data direction signal is required for each signal line. In the above example, the transmission directions can be appropriately switched by the two data direction signals. This enables the number of output terminals for data direction signals in the host controller and that of input terminals for data direction signals in the level shifter to be reduced.

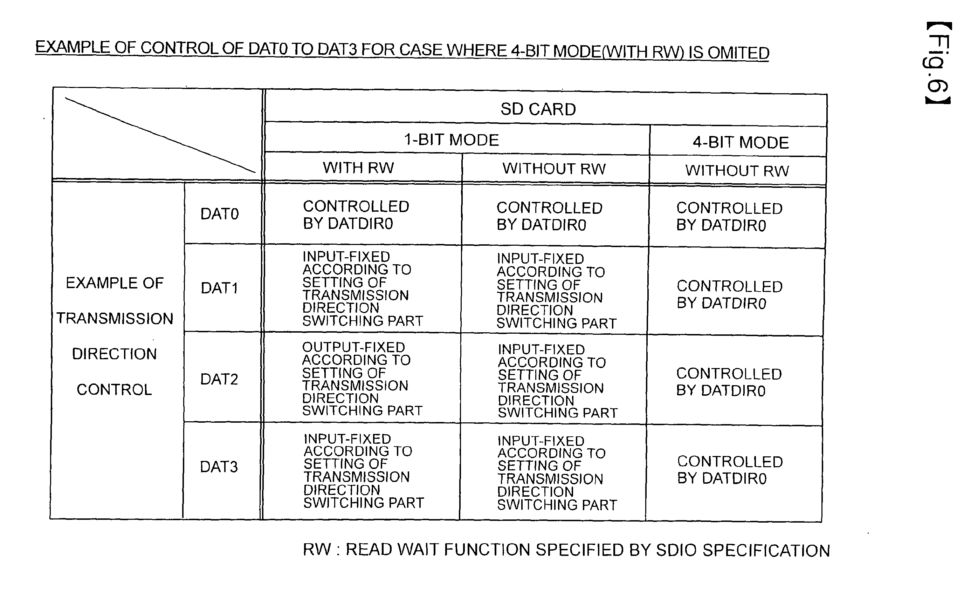

Fig. 6 is a diagram illustrating another example of the operations in the level shifter illustrated in Fig. 2, in which a control method of the transmission directions of DAT0 to DAT3 in each of the operation modes is illustrated as an example for a case where the 4-bit mode (with Read Wait function) of the SDIO card is not required. In this example, the operation modes of the SDIO card, i.e., the "1-bit mode" "with Read Wait function", "1-bit mode" "without Rea Wait function", and "4-bit mode" "without Read Wait function" are illustrated. In addition, the two operation modes of the SD card are the same as those in the Fig. 5 case.

In this example, in any of the operation modes in the "1-bit mode" of the SDIO card, the transmission direction of the data signal DAT0 is switched by the data direction signal DATDIR0, and those of the other data signals are "input-" or "output-fixed". In particular, in the "1-bit mode" "with Read Wait function", the transmission directions of the data signals DAT1 and DAT3 are "input-fixed", and that of the data signal DAT2 is "output-fixed". Also, in the "1-bit mode" "without Read Wait function", the transmission directions of the data signals DAT1 to DAT3 are "input-fixed".

Further, in the "4-bit mode" "without Read Wait function", the transmission directions of the data signals DAT0 to DAT3 are switched by the data direction signal DATDIR0. In such a case, the transmission directions of the data signals can be respectively switched in an appropriate manner by the one direction signal.

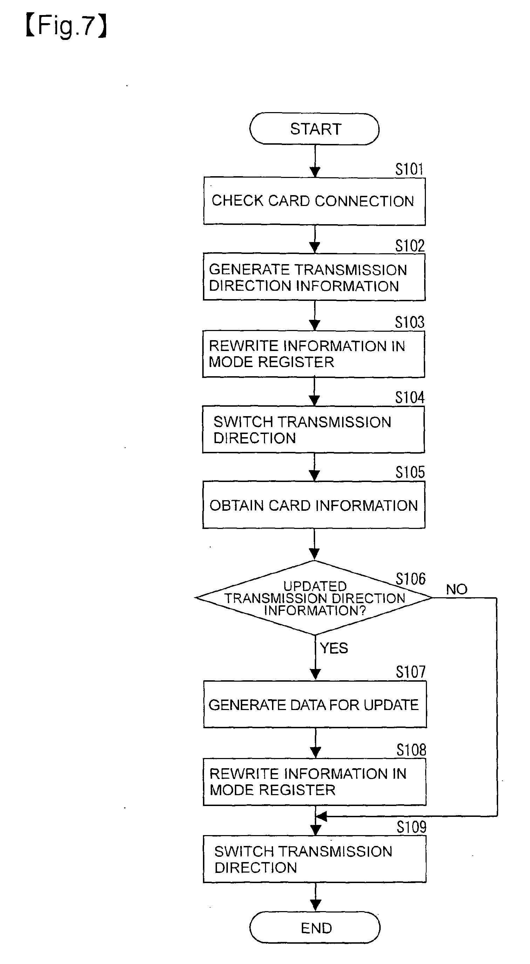

Steps S101 to S109 of Fig. 7 represent a flowchart illustrating one example of operations in the data transmission system of Fig. 1. The host controller 1 first checks that the memory card 3, input/output card, or input/output device having the same interface as that of the memory card is connected (Step S101). The host controller 1 generates transmission direction information predetermined for each of the devices to start data transfer to a card or device with which the connection has been checked, and then outputs it to the level shifter 2 as serial or parallel data (Step S102). The transmission direction information rewriting part 28 of the level shifter 2 rewrites the transmission direction information in the mode register 29 based on the data having been input from the host controller 1 (Step S103). The transmission direction control part 27 switches a transmission direction of each of the data signals based on the updated transmission direction information (Step S104).

Subsequently, the host controller 1 reads information on the card or device via the level shifter 2, and then detects based on the read information an operation mode into which the card or device is to move, to thereby determine whether or not the transmission direction information in the level shifter 2 should be rewritten (Steps S105 and 5106).

The host controller 1 changes an operation mode of the memory card, input/output card, or input/output device having the same interface as that of the memory card, and if the transmission direction information in the level shifter 2 should be updated, generates data for the update of the transmission direction information to output it to the level shifter 2 as serial or parallel data (step S107). The transmission direction information rewriting part 28 of the level shifter 2 rewrites the transmission direction information in the mode register 29 based on the data for the update when the date for the update is input from the host controller 1 (Step S108).

The transmission direction control part 27 switches the transmission direction of each of the data signals based on the updated transmission direction information (Step S109).

According to the present embodiment, by preliminarily storing the transmission direction information corresponding to the operation mode of the memory card, input/output card, or input/output device having the same interface as that of the memory card, a transmission direction of a data signal among the bit-by-bit data signals, which is not required to be switched in accordance with data in a specific operation mode, can be specified by the transmission direction information, so that the transmission direction of each of the data signals can be appropriately switched at any time without respectively requiring data direction signals for the data signals. Accordingly, the configuration of the data direction signals generated when the host controller respectively controls the transmission direction of the bit-by-bit data signal can be simplified.

This application claims the Paris convention priority of the patent application filed on September 12, 2005, in Japan (Japanese Patent Application No.2005-263211), which is incorporated herein by reference in its entirety.

### BRIEF DESCRIPTION OF THE DRAWINGS

[Fig. 1] Fig. 1 is a block diagram illustrating one example of a schematic configuration of a data transmission system including an input/output device for a memory card according to an embodiment of the present invention.
[Fig. 2] Fig. 2 is a circuit diagram illustrating a configuration example in a main part of the data transmission system illustrated in Fig. 1, in which a level shifter 2 is illustrated.
[Fig. 3] Fig. 3 is a diagram illustrating one example of operations in the level shifter illustrated in Fig. 2, in which control patterns of transmission directions of data signals DAT0 to DAT3 are illustrated as an example.
[Fig. 4] Fig. 4 illustrates states of the DAT0 to DAT3 terminals in the respective modes of a memory card connected to the level shifter illustrated in Fig. 2, as an example.
[Fig. 5] Fig. 5 is a diagram illustrating one example of the operations in the level shifter illustrated in Fig. 2, in which a control method of transmission directions in each of the operation modes of the memory card is illustrated as an example.
[Fig. 6] Fig. 6 is a diagram illustrating another example of the operations in the level shifter illustrated in Fig. 2, in which signal states are illustrated for a case where a 4-bit mode (with RW) is omitted.
[Fig. 7] Fig. 7 is a flowchart illustrating one example of operations in the data transmission system of Fig. 1.

### DESCRIPTION OF REFERENCE NUMERALS

1: Host controller
2: Level shifter
3: Memory card
21 to 25: Driver circuit
21a, 22a, 23b, 24a, 25b: Input buffer
21b, 22b, 23a, 24b, 25a: Output buffer
26, 27: Transmission direction control part
28: Transmission direction information rewriting part
29: Mode register
29a to 29c: Mode register
101 to 109, 201 to 206: Input/output terminal

## Claims

1. An input/output device for a memory card for inputting/outputting a signal transmitted between an input/output device having a memory card type interface and a host controller, comprising:
a first driver circuit for outputting to the input/output device a data signal having been input from the host controller;
a second driver circuit for outputting to said host controller a data signal having been input from said input/output device;
transmission direction control means adapted to switch a transmission direction of each of said data signals, said data signals being respectively transmitted via two or more input/output terminals used in common to an input of a data signal to said first driver circuit and an output of a data signal from said second driver circuit; and
transmission direction information storage means adapted to rewritably store transmission direction information,
wherein said transmission direction control means switches a transmission direction of the data signal based on a direction signal from said host controller and said transmission direction information.

2. The input/output device for a memory card according to claim 1, wherein said first driver circuit is comprised of a voltage conversion circuit for stepping up a signal voltage, and said second driver circuit is comprised of a voltage conversion circuit for stepping down a signal voltage.

3. The input/output device for a memory card according to claim 1, comprising transmission direction information rewriting means adapted to rewrite said transmission direction information based on transmission direction information update data input from said host controller.

4. The input/output device for a memory card according to claim 3, wherein said transmission direction information update data is input via a serial interface.

5. A control method for an input/output device for a memory card comprised of a first driver circuit for outputting to a memory card a data signal having been input from a host controller and a second driver circuit for outputting to said host controller a data signal having been input from said memory card, comprising:
a transmission direction information writing step of writing transmission direction information in a register based on transmission direction information update data having been input from said host controller; and
a transmission direction switching step of switching a transmission direction of each of data signals based on a direction signal from said host controller and said transmission direction information, said data signals being respectively transmitted via two or more input/output terminals used in common to an input of data signal to said first driver circuit and an output of data signal from said second driver circuit.
